# EUROPÄISCHE PATENTSCHRIFT

(11) **EP 1 905 142 B1**
(45) Veröffentlichungstag und Bekanntmachung des Hinweises auf die Patenterteilung: **27.02.2019**
(21) Anmeldenummer: 06754474.2
(22) Anmeldetag: 21.06.2006
(51) Int. Cl.: H02J 50/10

(54) **SYSTEM ZUR BERÜHRUNGSLOSEN ENERGIEÜBERTRAGUNG UND VERFAHREN ZUM BETREIBEN EINES SOLCHEN SYSTEMS**
CONTACTLESS ENERGY TRANSMISSION SYSTEM AND METHOD FOR THE OPERATION OF SUCH A SYSTEM
SYSTEME DE TRANSMISSION D'ENERGIE SANS CONTACT ET PROCEDE DE FONCTIONNEMENT D'UN TEL SYSTEME

(30) Priorität: 07.07.2005 DE 102005032107; 22.03.2006 DE 102006013004
(43) Veröffentlichungstag der Anmeldung: 02.04.2008
(73) Patentinhaber: SEW-EURODRIVE GmbH & Co. KG, 76646 Bruchsal (DE)
(72) Erfinder: SCHMIDT, Josef, 76676 Graben-Neudorf (DE); UHL, Thomas, 76646 Bruchsal (DE); TREIER, Christian, 76131 Karlsruhe (DE); WOLF, Harald, 76698 Ubstadt-Weiher (DE)
(86) Internationale Anmeldenummer: PCT/EP2006/005930
(87) Internationale Veröffentlichungsnummer: WO 2007/006400

(56) Entgegenhaltungen:
- WO-A-2004/112216
- DE-A1- 10 158 794
- DE-A1- 19 837 675
- US-A- 5 293 308
- US-A1- 2002 141 215
- US-A1- 2005 135 129

## Beschreibung

Die Erfindung betrifft ein System zur berührungslosen Energieübertragung und ein Verfahren zum Betreiben eines solchen Systems.

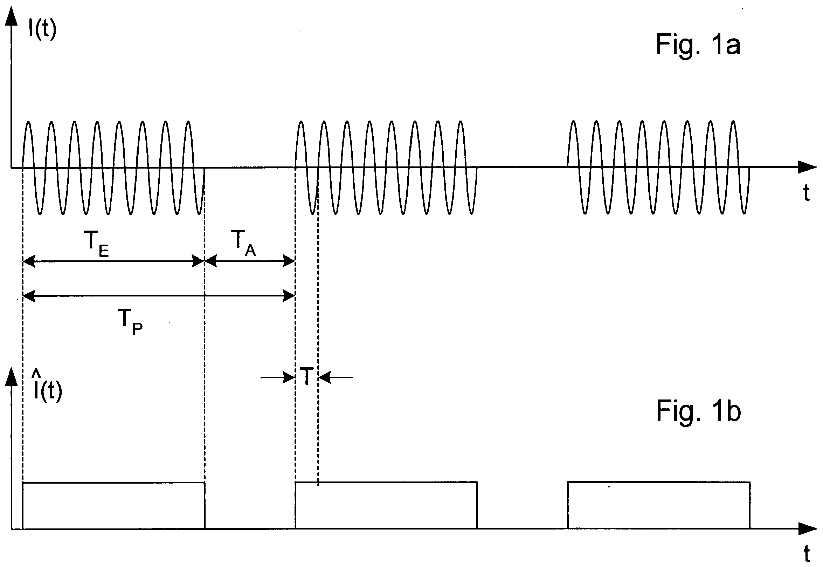

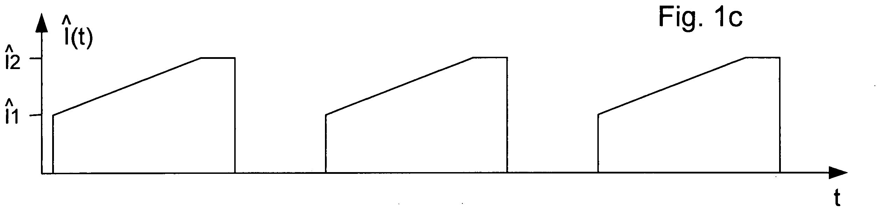

Aus der DE 100 53 373 und insbesondere der Figur 1 sowie den dort zitierten Schriften ist ein System zur Berührungslosen Energieübertragung bekannt. Solche System weisen eine Einspeisung auf, die einen mittelfrequenten Wechselstrom in einen langgestreckten Primärleiter einprägt. Mobile Verbraucher sind entlang dem Primärleiter bewegbar und weisen eine an den Primärleiter induktiv gekoppelte Sekundärspule auf, mittels welcher Energie abnehmbar ist. Bei industriellem Einsatz treten hohe Ströme auf, für die dann der Primärleiter mit entsprechend großem Querschnitt auszulegen ist, was allerdings zu hohen Kosten führt. Darüber hinaus treten hohe Ohm'sche Verluste auf.

Aus der DE 101 58 794 A1 ist ein induktiver kontaktloser Leistungsübertrager bekannt.

Aus der US 2002/141215 A1 ist eine DC/AC Umwandlereinheit mit kontaktlosem induktivem Energietransfer bekannt.

Aus der US 5 293 308 A ist ein induktives Leistungsverteilungssystem bekannt.

Aus der US 2005/135129 A1 ist ein kontaktloses Leistungsversorgungssystem bekannt.

Aus der WO 2004/112216 A ist ein industrieller Roboter bekannt.

Aus der DE 198 37 675 A1 ist eine Ladevorrichtung für Akkumulatoren in einem mobilen elektrischen Gerät mit induktiver Energieübertragung bekannt.

Der Erfindung liegt daher die Aufgabe zugrunde, den Umweltschutz zu erhöhen.

Erfindungsgemäß wird die Aufgabe bei dem System nach den in Anspruch 1 und bei dem Verfahren nach den in Anspruch 9 angegebenen Merkmalen gelöst.

Wesentliche Merkmale der Erfindung bei dem System sind, dass es zur berührungslosen Energieübertragung vorgesehen ist und
eine Einspeisung umfasst, die einen mittelfrequenten Wechselstrom in einen langgestreckten Primärleiter einprägt, an welchen mindestens eine Sekundärspule zur Versorgung eines Verbrauchers induktiv gekoppelt ist,
wobei die Einspeisung derart ausgeführt ist, dass eine Pulsweite und/oder der Amplitudenverlauf des Wechselstroms vorgebbar, steuerbar oder regelbar ist.

Von Vorteil ist dabei, dass der Umweltschutz erhöht ist und die Kosten erniedrigt sind, weil die Ohmschen Verluste verringert werden und somit die elektrische Energie besser ausgenutzt wird. Darüber hinaus ist ein gepulstes Betreiben vorteilig, weil dauerhaftes Auftreten von Lichtbögen vermieden werden. Wenn nämlich ein Bauteil oder eine elektrische Verbindung im Fehler- oder Versagensfall aufgetrennt wird, entsteht ein Lichtbogen, der dauerhaft bestehen bleiben kann, solange der Strom vorhanden ist. Dadurch, dass jedoch eine Pulsweite vorhanden ist, also kein dauerhafter versorgender Strom vorhanden ist, wird der Lichtbogen kurzzeitig nicht versorgt. Beispielsweise wirkt die Unterbrechung für ein paar ms, vorzugsweise mehr als 4 ms. Bei Wiedereinschalten der Stromversorgung, also Erzeugen des nächsten Strom-Pulses im Primärleiter kann der Lichtbogen nicht mehr zünden, weil der Abstand bei der aufgetrennten Stelle zu groß für die vorhandenen Spannungen ist. Somit ist mit der gepulsten Betriebsweise auch zusätzlich die Sicherheit der Anlage erhöht.

Der gesamte Energieverbrauch der Verbraucher ist vorteiligerweise durch die induktive Übertragung vom Primärleiter aus übermittelbar. Information ist separat übertragbar oder durch Aufmodulation höher frequenter Stromanteile auf den Primärleiter. Dabei findet die Informationsübertragung je nach Bedarf auch dann statt, wenn der Primärstrom verschwindet. Bei vorteilhafter Ausgestaltung ist die Informationsübertragung in Zeitbereichen, in welchen der Primärstrom nicht verschwindet, zusätzlich synchronisiert auf den Nulldurchgang des Primärstromes.

Bei einer vorteilhaften Ausgestaltung ist der Primärleiter langgestreckt vorgesehen, insbesondere wobei der Verbraucher entlang dem Primärleiter bewegbar angeordnet ist. Von Vorteil ist dabei, dass schienengebundene oder mit einer Spurführungsantenne ausgestattete Fahrzeuge berührungslos versorgbar sind.

Bei einer vorteilhaften Ausgestaltung ist der Primärleiter derart vorgesehen, dass der Verbraucher relativ zum Primärleiter drehbar angeordnet ist. Von Vorteil ist dabei, dass Drehtische oder andere Drehachsen bei Anlagen oder Maschinen, wie beispielsweise Roboter oder Werkzeugmaschinen, versorgbar sind.

Bei einer vorteilhaften Ausgestaltung liegt die Mittelfrequenz zwischen 9 und 100 kHz. Von Vorteil ist dabei, dass zum Schalten der Primärleiter-Starkströme elektronische Leistungshalbleiter, wie IGBT oder MOSFET, verwendbar sind bei geringen Verlusten. Somit ist ein hoher Wirkungsgrad erreichbar.

Bei einer vorteilhaften Ausgestaltung ist die Pulsweite, Pulsweitendauer und/oder die charakteristische Zeit bei der Amplitudenmodulation, wie Amplitudenmodulationsperiodendauer, größer als die Periodendauer des mittelfrequenten Stromes, insbesondere zehnmal größer oder mehr. Von Vorteil ist dabei, dass auch bei großer Streckeninduktivität eine Anpassung der im Mittel zur Verfügung stehenden Primärstrommenge an den Bedarf der induktiv versorgten Verbraucher ermöglicht ist.

Bei einer vorteilhaften Ausgestaltung ist das Pulsweitenverhältnis auf Energiepuffer und Leistungsverbrauch der Verbraucher abgestimmt. Von Vorteil ist dabei, dass weniger Strom fließt als der maximal mögliche und somit die Ohm'schen Verluste geringer sind.

Bei einer vorteilhaften Ausgestaltung sind die Verbraucher mit den ihnen zugeordneten Sekundärspulen entlang des Primärleiters bewegbar angeordnet. Von Vorteil ist dabei, dass eine berührungslose Versorgung bei bewegbaren Verbrauchern vorsehbar ist.

Bei einer vorteilhaften Ausgestaltung ist dem Primärleiter oder Abschnitten des Primärleiters jeweils ein Streckencontroller zugeordnet. Von Vorteil ist dabei, dass jeder Streckenabschnitt genau steuerbar, regelbar und/oder kontrollierbar ist.

Bei einer vorteilhaften Ausgestaltung sind Mittel zum Datenaustausch von der Einspeisung, vom Streckencontroller und/oder dem Verbraucher oder den Verbrauchern umfasst. Von Vorteil ist dabei, dass Daten an die Einspeisung übermittelbar und dann von dieser berücksichtigbar sind. Der Strom im Primärleiter kann dadurch angepasst werden an den wirklichen Bedarf.

Bei einer vorteilhaften Ausgestaltung ist die Pulsweite, das Pulsweitenverhältnis und/oder der Amplitudenverlauf von der Einspeisung in Abhängigkeit von Daten, wie Anzahl der Verbraucher in einem Streckenabschnitt, Energiemenge im Energiepuffer des Verbrauchers, jeweiliger Leistungsbedarf des Verbrauchers, vorgebbar. Von Vorteil ist dabei, dass es ermöglicht ist, möglichst wenig Strom im Primärleiter einzuspeisen. Auf diese Weise sind die Ohm'schen Verluste auf ein Minimum begrenzbar.

Verfahren zum Betreiben eines Systems zur berührungslosen Energieübertragung

Wesentliche Merkmale der Erfindung bei dem Verfahren sind, dass von einer Einspeisung mittelfrequenter Wechselstrom in einen langgestreckten Primärleiter eingeprägt wird, an welchen mindestens eine Sekundärspule zur Versorgung mindestens eines Verbrauchers induktiv gekoppelt ist, **wobei** der Strom derart eingespeist wird, dass die Ohm'schen Verluste möglichst klein werden oder minimal sind. Somit ist der Wirkungsgrad des Systems verbessert und es sind Kabel mit kleinerem Querschnitt als Primärleiter verwendbar.

Insbesondere wird bei Einspeisen des Stromes Pulsweite, Pulsweitenverhältnis und/oder der Amplitudenverlauf vorgegeben, gesteuert oder geregelt wird. Dabei sind vorteiligerweise Informationen, wie Anzahl der Verbraucher in einem Streckenabschnitt, Energiemenge im Energiepuffer des Verbrauchers und/oder jeweiliger Leistungsbedarf des Verbrauchers berücksichtigbar.

Bei einer vorteilhaften Ausgestaltung wird der Leistungsbedarf und/oder der zeitliche Verlauf des Leistungsbedarfs eines Verbrauchers vorausbestimmt wird, insbesondere bevor er auftritt. Vorteiligerweise ist somit ein kritischer Wert überschreitbar, da der Stromverlauf bestimmbar ist und somit auch die genaue thermische Belastung des Primärleiters und weiterer Komponenten. Die maximal zulässige Temperatur ist somit stets berücksichtigbar.

Bei einer vorteilhaften Ausgestaltung wird ein derartiger zeitlicher Verlauf des Stromes im Primärleiter vorgesehen, dass ein kritischer Wert des Stromes für einen Zeitabschnitt überschritten wird, wobei der kritische Wert der für den Primärleiter maximal zulässige Stromwert bei konstantem dauerhaftem Stromwert im Primärleiter ist und der Zeitabschnitt derart kurz ist, dass vom Verlauf des Stromes in diesem Zeitabschnitt keine Zerstörung des Primärleiters zu erwarten ist. Vorteiligerweise ist der kritische Stromwert dann erreicht, wenn dauerhaft ein konstanter Stromwert, insbesondere Effektiv-Wechselstromwert, anliegt. Wesentlich ist hierbei die entstehende Temperatur. Beim kritischen Wert ist eine kritische Temperatur erreicht, die bei Überschreitung zur Zerstörung des Primärleiters führen würde. Weitere Vorteile ergeben sich aus den Unteransprüchen.

Die Erfindung wird nun anhand von Abbildungen näher erläutert:
In der Figur 1 ist ein wesentliches Merkmal der Erfindung gezeigt: Der Strom im langgestreckten Linienleiter verläuft zwar sinusförmig. Jedoch ist er zeitweise abgeschaltet. Durch eine solche Pulsweitenmodulation ist eine Verringerung der Leistung der Einspeisung ermöglicht.

Die Steuerung oder Regelung der Pulsweite ergibt insgesamt als Vorteil, dass über die Standzeit oder Betriebszeit der Anlage gesehen kleiner Ströme auftreten und somit geringere Ohm'sche Verluste auftreten.

In Figur 1a ist ein beispielhafter Verlauf des Stromes im Primärleiter gezeigt. Das Pulsweitenverhältnis entspricht dem Verhältnis der Einschaltdauer T_E zur Zeitdauer des ausgeschalteten Zustandes T_A.

Die Periodendauer für die Pulsweitenmodulation beträgt T_P. Diese ist sehr viel größer als die Periodendauer T des mittelfrequenten Stromes. Letztgenannte entspricht einer Frequenz von etwa 20 bis 25 kHz. Es sind aber auch Frequenzen bis 50kHz oder gar 100kHz verwendbar.

In Figur 1b ist der Verlauf des Spitzenwertes Î des Stromes gezeigt. Bei dem gezeigten Pulsweitenverhältnis werden nur etwa 2/3 der maximal möglichen Leistung an die induktiv gekoppelten Verbraucher übertragen. Entsprechend werden aber auch die Ohm'schen Verluste geringer.

Die Verbraucher umfassen eine von der Sekundärspule gespeisten Energiepuffer, wie beispielsweise ein dem Gleichrichter nachgeschalteter Glättungskondensator oder ein der Sekundärspule parallel geschalteter Kondensator, dessen Kapazität derart bemessen ist, dass mit der Sekundärspule ein Schwingkreis gebildet ist, dessen Resonanzfrequenz der Frequenz des Stromes im Primärleiter entspricht. Auch weitere oder andere Energiepuffer sind verwendbar. Die Energiekapazität des oder der Energiepuffer wird durch die Erfindung ausgenutzt. Denn während der Zeitdauer T_A versorgt der Energiepuffer den Verbraucher. Während der Zeitdauer T_E versorgt die Einspeisung den Verbraucher und füllt den Energiepuffer zusätzlich auf.

In Figur 1b ist ein anderer beispielhafter Verlauf des Spitzenwertes Î des Stromes im Primärleiter gezeigt. Es ist also während der Zeitdauer T_E ein Zeitverlauf des Stromspitzenwertes vorgebbar. Im Beispiel steigt der Spitzenwert zunächst an vom Wert Î_1 aus und erreicht dann ein Maximum Î_2, das konstant bleibt, bis der Strom abgeschaltet wird.

Es gibt für die Erfindung mehrere Varianten der Erfindung:
Eine erste bezieht sich darauf, dass die Einspeiseschaltung Mittel zur Strom- und/oder Spannungserfassung umfasst, deren Messwerte zur Bestimmung eines Leistungssollwertes verwendet werden.

Steigt beispielsweise bei den Verbrauchern der Leistungsbedarf an, wird dies an der Veränderung der Strommesswerte und/oder Spannungsmesswerte erkennbar und ein gegensteuern durch Erhöhen des Pulsweitenverhältnisses oder des Spitzenwertes des Primärleiterstromes ausführbar. Das Mittel zur Stromerfassung kann direkt am Primärleiter angebracht sein. Ein Mittel zur Spannungserfassung ist an einem von der Einspeiseschaltung umfassten Gyrator anbringbar. Dabei ist der Gyrator in der der Figur 1 der DE 100 53 373 gezeigt, deren in der Beschreibung offenbarte Merkmale des Systems zur berührungslosen Energieübertragung ebenfalls von der vorliegenden Erfindung umfasst sind.

In einem anderen erfindungsgemäßen Ausführungsbeispiel weist der Primärleiter in der gesamten Anlage zumindest einen oder aber auch mehrere Streckenabschnitte auf, denen jeweils ein Streckencontroller zugeordnet ist, der eine elektronische Schaltung umfasst und der zum Datenaustausch mit der Einspeiseschaltung befähigt ist. Somit ist es ermöglicht, die Anzahl der Verbraucher, welche im Streckenabschnitt jeweilig zu versorgen sind sowie weitere Daten, wie beispielsweise deren benötigte Leistung und vorhandene Energiekapazität im Energiepuffer, an die Einspeiseschaltung zu übermitteln. Daraus ist es dann der Einspeiseschaltung ermöglicht, die benötigte Leistung und somit auch das Pulsweitenmodulationsverhältnis und/oder den Verlauf des Spitzenwertes des Stromes im Primärleiter zu bestimmen und entsprechend einzuprägen.

In einem anderen erfindungsgemäßen Ausführungsbeispiel weist das System sogar Verbraucher auf, die zum Datenaustausch mit der Einspeiseschaltung direkt oder über einen jeweiligen Streckencontroller verbunden sind. Somit ist es ermöglicht, dass die Verbraucher ihre jeweils momentan benötigte Leistung und/oder ihre im Energiepuffer vorhandenen Energiemenge übermitteln und die Einspeiseschaltung des Primärleiterstrom entsprechend stellt, wobei dann das Pulsweitenmodulationsverhältnis und/oder der Primärleiterstromspitzenwertverlauf abhängt von diesen übermittelten Informationen.

Zur Datenübertragung sind im stationären Bereich Bussysteme des Standes der Technik verwendbar. Zur Übertragung der Daten auf oder von bewegbar angeordneten Verbrauchern ist eine Übertragung per Funkwellen, Infrarotwellen, anderer elektromagnetischer Wellen, Ultraschallwellen vorteilig. Auch ein längs dem Primärleiter verlegter geschlitzter Koaxialleiter ist verwendbar, wenn das mobile Teil eine entsprechend geeignete Antenne entlang den Schlitzen des Koaxialleiters bewegt. Auch ein Aufmodulieren der Information auf den Primärleiterstrom mit höheren Frequenzen als der Mittelfrequenz ist zur Datenübertragung vorteilig ausführbar.

In einem weiteren erfindungsgemäßen Ausführungsbeispiel ist die Sekundärspule mit einem Strom-Spannungswandler verbunden, dessen Ausgang einen Gleichrichter versorgt. Die so erzeugte Gleichspannung ist als Zwischenkreisspannung für einen Umrichter zur Versorgung eines Elektromotors verwendbar. Der Strom-Spannungswandler ist dabei aus passiven elektronischen Bauteilen, wie Induktivitäten, Kondensatoren und Widerständen, aufgebaut. Da die primärseitige Einspeiseschaltung einen mittelfrequenten Strom einprägt, also im Wesentlichen ein Stromquellenverhalten aufweist, ist die vom sekundärseitig angeordneten Gleichrichter zur Verfügung gestellte Gleichspannung konstant. Denn der Ausgang des Gleichrichters ist mit einem Kondensator als Energiespeicher verbunden, der die Gleichspannung puffert. Wenn also nun der Stromspitzenwert Î im Primärleiter reduziert werden würde, dann würde die Gleichspannung, also die Zwischenkreisspannung, entsprechend reduziert, beispielsweise auch um den gleichen Faktor wie der Stromspitzenwert Î im Primärleiter. Da aber bei der vorliegenden Erfindung der Strom im Primärleiter mit vollem Stromspitzenwert Î vorgesehen ist, ist auch die gleichgerichtete Spannung immer auf ihrem entsprechenden hohen Wert. Der Energiepuffer ist derart ausgelegt, dass er die Spannung über die Ausschaltdauer T_A hinweg puffert, also nur unwesentlich absinken lässt.

In einem weiteren erfindungsgemäßen Ausführungsbeispiel ist der Strom-Spannungswandler für eine höhere Leistung ausgelegt. Er ist also auch bei einem System einsetzbar, wo der Strom im Primärleiter dauerhaft seinen Spitzenwert aufweist. Derselbe Strom-Spannungswandler ist aber auch in einem System einsetzbar, bei dem ein Pulsweitenmodulationsverhältnis von weniger als 100% vorgesehen ist. Auf diese Weise ist die Variantenvielfalt der Strom-Spannungswandler einschränkbar. Somit sind die Kosten der gesamten System-Baureihe verringerbar.

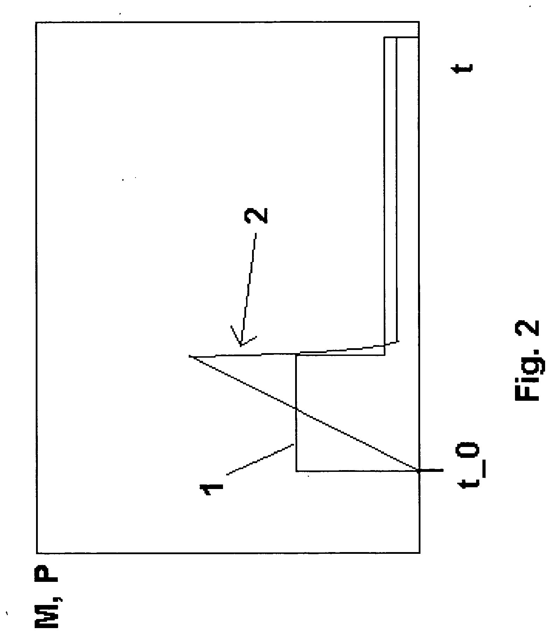

In Figur 2 ist der beispielhafte zeitliche idealisierte Verlauf 1 eines Drehmomentes M eines Elektromotors gezeigt, der beim Starten eines Fahrzeuges notwendig ist. Der Antrieb, also Verbraucher, umfasst hierbei beispielhaft einen Umrichter zur Versorgung des Elektromotors, der wiederum das Fahrzeug antreibt oder eine Achse einer Maschine. Via Informationsübertragung wird dem Antrieb, insbesondere also dem Umrichter, bekannt gemacht, dass er ab dem Zeitpunkt t_0 das Fahrzeug starten soll Dabei wird auch bekannt gemacht, dass das Fahrzeug eine vorgebbare Sollgeschwindigkeit erreichen soll. Somit ist der Umrichter in der Lage, ab dem Zeitpunkt t_0 das maximale Drehmoment, also auch die maximal mögliche Beschleunigung vorzugeben. Nach einer vom Umrichter oder von einem Rechner bestimmbaren erste Zeitspanne ist die Sollgeschwindigkeit erreicht und es muss nur ein geringes Drehmoment aufgebracht werden zur Überwindung von Roll- und/oder Gleitreibung.

Wie oben schon beschrieben wird die Versorgung des Antriebs berührungslos aus den Primärleitern ausgeführt. Dabei ist in den Primärleitern nur ein kritischer maximaler Dauerstromwert erlaubt. Wird dieser dauerhaft überschritten, erhöht sich das Risiko für Zerstörung von Bauteilen, wie beispielsweise für ein Durchschmelzen der Isolation oder der Kupfer-Leitungsdrähte des Primärleiters.

Bei dem geschilderten Ausführen des Startens des Fahrzeuges wird ein ebenfalls in Figur 2 dargestellter zeitlicher idealisierte Verlauf der elektrischen Leistung P benötigt, welche vom Primärleiter aus an den Antrieb geliefert werden muss.

Bei der Erfindung ist es dem Umrichter ermöglicht, kurzfristig, also während der ersten Zeitspanne ein Überschreiten des kritischen Stromwertes wegen stark ansteigendem Leistungsbedarf zuzulassen. Hierzu führt der Umrichter eine Prädiktion des Leistungsbedarfs und somit auch Stromverlaufes im Primärleiter aus und bestimmt die zulässige Zeitspanne des kurzfristigen Überschreitens des kritischen Stromwertes.

Der prädiktierte, also vorher schon bestimmte Leistungsbedarf wird an die Einspeisung gemeldet und von dieser dann entsprechend berücksichtigt, also ein entsprechend überhöhter Strom in den Primärleiter eingespeist.

In einem weiteren erfindungsgemäßen Ausführungsbeispiel ist nur ein Verbraucher vorgesehen. Somit ist der vorher bestimmte Verbrauch genau diesem Verbraucher zuordenbar und die Stromüberschreitung für diesen bestimmt.

In einem weiteren erfindungsgemäßen Ausführungsbeispiel sind mehrere Verbraucher vorgesehen. Jeder meldet hierbei seinen prädiktierten Strombedarf an die Einspeisung, die dann den insgesamt benötigten Strom einspeist.

### Bezugszeichenliste

Î Spitzenwert
T Periodendauer
T_E Einschaltdauer
T_A Ausschaltdauer
T_P Periodendauer für die Pulsweitenmodulation

1 Verlauf eines Drehmomentes M
2 Verlauf der elektrischen Leistung P

## Patentansprüche

1. System zur berührungslosen Energieübertragung,
umfassend eine Einspeisung, die einen mittelfrequenten Wechselstrom in einen Primärleiter einprägt, an welchen mindestens eine Sekundärspule zur Versorgung mindestens eines Verbrauchers induktiv gekoppelt ist,
die Einspeisung derart ausgeführt ist, dass eine Pulsweite, Pulsweitenverhältnis und/oder der Amplitudenverlauf des Wechselstroms vorgebbar, steuerbar oder regelbar ist, **dadurch gekennzeichnet, dass** der Primärleiter langgestreckt vorgesehen ist, wobei der Verbraucher entlang dem Primärleiter bewegbar angeordnet ist,
wobei die Pulsweite, Pulsweitendauer und/oder die charakteristische Zeit bei der Amplitudenmodulation, wie Amplitudenmodulationsperiodendauer, zehnmal größer oder mehr ist als die Periodendauer des mittelfrequenten Stromes.

2. System zur berührungslosen Energieübertragung,
umfassend eine Einspeisung, die einen mittelfrequenten Wechselstrom in einen Primärleiter einprägt, an welchen mindestens eine Sekundärspule zur Versorgung mindestens eines Verbrauchers induktiv gekoppelt ist,
die Einspeisung derart ausgeführt ist, dass eine Pulsweite, Pulsweitenverhältnis und/oder der Amplitudenverlauf des Wechselstroms vorgebbar, steuerbar oder regelbar ist, **dadurch gekennzeichnet, dass** der Primärleiter derart vorgesehen ist, dass der Verbraucher relativ zum Primärleiter drehbar angeordnet ist,
wobei die Pulsweite, Pulsweitendauer und/oder die charakteristische Zeit bei der Amplitudenmodulation, wie Amplitudenmodulationsperiodendauer, zehnmal größer oder mehr ist als die Periodendauer des mittelfrequenten Stromes.

3. System nach Anspruch 1 oder 2,
**dadurch gekennzeichnet, dass**
die Mittelfrequenz zwischen 9 und 100 kHz liegt.

4. System nach einem der vorangegangenen Ansprüche,
**dadurch gekennzeichnet, dass**
das Pulsweitenverhältnis auf Energiepuffer und Leistungsverbrauch der Verbraucher abgestimmt ist.

5. System nach einem der vorangegangenen Ansprüche,
**dadurch gekennzeichnet, dass**
die Verbraucher mit den ihnen zugeordneten Sekundärspulen entlang des Primärleiters bewegbar angeordnet sind.

6. System nach einem der vorangegangenen Ansprüche,
**dadurch gekennzeichnet, dass**
dem Primärleiter oder Abschnitten des Primärleiters jeweils ein Streckencontroller zugeordnet ist.

7. System nach einem der vorangegangenen Ansprüche,
**dadurch gekennzeichnet, dass**
Mittel zum Datenaustausch von der Einspeisung, vom Streckencontroller und/oder dem Verbraucher oder den Verbrauchern umfasst sind.

8. System nach einem der vorangegangenen Ansprüche,
**dadurch gekennzeichnet, dass**
die Pulsweite, das Pulsweitenverhältnis und/oder der Amplitudenverlauf von der Einspeisung in Abhängigkeit von Daten, wie Anzahl der Verbraucher in einem Streckenabschnitt, Energiemenge im Energiepuffer des Verbrauchers, jeweiliger Leistungsbedarf des Verbrauchers, vorgebbar ist.

9. System nach einem der vorangegangenen Ansprüche,
**dadurch gekennzeichnet, dass**
ein Verbraucher Mittel zur Bestimmung des zeitlichen Verlaufes seines Leistungsbedarf oder Strombedarfs umfasst.

10. System nach einem der vorangegangenen Ansprüche,
**dadurch gekennzeichnet, dass**
ein Verbraucher Mittel zur Übermittlung von Informationen über den zeitlichen Verlauf seines Leistungsbedarfs oder Strombedarfs an die Einspeisung oder an einen mit der Einspeisung zur Signal- oder Informationsübermittelung verbundenen Rechner umfasst.

11. Verfahren zum Betreiben eines Systems zur berührungslosen Energieübertragung wobei von einer Einspeisung mittelfrequenter Wechselstrom in einen langgestreckten Primärleiter eingeprägt wird, an welchen mindestens eine Sekundärspule zur Versorgung mindestens eines Verbrauchers induktiv gekoppelt ist,
wobei der Verbraucher entlang dem Primärleiter bewegbar angeordnet ist,
**dadurch gekennzeichnet, dass**
der Strom derart eingespeist wird, dass die Ohm'schen Verluste möglichst klein werden oder minimal sind,
wobei der Strom derart eingespeist wird, dass eine Pulsweite, Pulsweitenverhältnis und/oder der Amplitudenverlauf des Wechselstroms vorgegeben, gesteuert oder geregelt wird, dass die Pulsweite, Pulsweitendauer und/oder die charakteristische Zeit bei der Amplitudenmodulation, wie Amplitudenmodulationsperiodendauer, zehnmal größer oder mehr ist als die Periodendauer des mittelfrequenten Stromes.

12. Verfahren nach Anspruch 11,
**dadurch gekennzeichnet, dass**
Informationen, wie Anzahl der Verbraucher in einem Streckenabschnitt, Energiemenge im Energiepuffer des Verbrauchers und/oder jeweiliger Leistungsbedarf des Verbrauchers berücksichtigt werden.

13. Verfahren nach Anspruch 11 oder 12,
**dadurch gekennzeichnet, dass**
der Leistungsbedarf und/oder der zeitliche Verlauf des Leistungsbedarfs eines Verbrauchers vorausbestimmt wird, insbesondere bevor er auftritt.

14. Verfahren nach einem der Ansprüche 11 bis 13,
**dadurch gekennzeichnet, dass**
ein derartiger zeitlicher Verlauf des Stromes im Primärleiter vorgesehen wird, dass ein kritischer Wert des Stromes für einen Zeitabschnitt überschritten wird, wobei der kritische Wert der für den Primärleiter maximal zulässige Stromwert bei konstantem dauerhaftem Stromwert im Primärleiter ist und der Zeitabschnitt derart kurz ist, dass vom Verlauf des Stromes in diesem Zeitabschnitt keine Zerstörung des Primärleiters zu erwarten ist.

## Claims

1. A system for contactless energy transfer,
comprising an infeed which injects a medium-frequency alternating current into a primary conductor, to which at least one secondary coil for supplying at least one consumer is inductively coupled,
the infeed is embodied such that a pulse width, pulse width ratio and/or the amplitude response of the alternating current can be specified, controlled or regulated,
**characterised in that**
the primary conductor is provided in elongate form, the consumer being arranged to be movable along the primary conductor,
wherein the pulse width, pulse width duration and/or the characteristic time upon the amplitude modulation, such as amplitude modulation period duration, is/are ten times or more greater than the period duration of the medium-frequency current.

2. A system for contactless energy transfer,
comprising an infeed which injects a medium-frequency alternating current into a primary conductor, to which at least one secondary coil for supplying at least one consumer is inductively coupled,
the infeed is embodied such that a pulse width, pulse width ratio and/or the amplitude response of the alternating current can be specified, controlled or regulated, **characterised in that**
the primary conductor is provided such that the consumer is arranged to be rotatable relative to the primary conductor,
wherein the pulse width, pulse width duration and/or the characteristic time upon the amplitude modulation, such as amplitude modulation period duration, is/are ten times or more greater than the period duration of the medium-frequency current.

3. A system according to Claim 1 or 2,
**characterised in that**
the medium frequency lies between 9 and 100 kHz.

4. A system according to one of the preceding claims,
**characterised in that**
the pulse width ratio is matched to the energy buffer and power consumption of the consumers.

5. A system according to one of the preceding claims,
**characterised in that**
the consumers with their associated secondary coils are arranged to be movable along the primary conductor.

6. A system according to one of the preceding claims,
**characterised in that**
in each case a path controller is associated with the primary conductor or portions of the primary conductor.

7. A system according to one of the preceding claims,
**characterised in that**
means for data exchange are comprised by the infeed, the path controller and/or the consumer or consumers.

8. A system according to one of the preceding claims,
**characterised in that**
the pulse width, the pulse width ratio and/or the amplitude response can be specified by the infeed dependent on data, such as number of consumers in a path portion, amount of energy in the energy buffer of the consumer, respective power requirement of the consumer.

9. A system according to one of the preceding claims,
**characterised in that**
a consumer comprises means for determining the time characteristic of its power requirement or current requirement.

10. A system according to one of the preceding claims,
**characterised in that**
a consumer comprises means for transmitting information about the time characteristic of its power requirement or current requirement to the infeed or to a computer which is connected to the infeed for transmitting signals or information.

11. A method for operating a system for contactless energy transfer
wherein medium-frequency alternating current is injected into an elongate primary conductor by an infeed, to which conductor at least one secondary coil for supplying at least one consumer is inductively coupled,
wherein the consumer is arranged to be movable along the primary conductor,
**characterised in that**
the current is fed in such that the ohmic losses become as small as possible or are minimal,
wherein the current is fed in such that a pulse width, pulse width ratio and/or the amplitude response of the alternating current is specified, controlled or regulated such that the pulse width, pulse width duration and/or the characteristic time upon the amplitude modulation, such as amplitude modulation period duration, is ten times or more greater than the period duration of the medium-frequency current.

12. A method according to Claim 11,
**characterised in that**
information, such as number of consumers in a path portion, amount of energy in the energy buffer of the consumer and/or respective power requirement of the consumer, is taken into account.

13. A method according to Claim 11 or 12,
**characterised in that**
the power requirement and/or the time characteristic of the power requirement of a consumer is/are determined in advance, in particular before it occurs.

14. A method according to one of Claims 11 to 13,
**characterised in that**
such a time characteristic of the current in the primary conductor is provided that a critical value of the current for a time period is exceeded, wherein the critical value is the maximum permissible current value for the primary conductor at a constant permanent current value in the primary conductor, and the time period is so short that no destruction of the primary conductor is to be expected from the characteristic of the current in this time period.

## Revendications

1. Système de transmission d'énergie sans contact,
comprenant une alimentation qui applique un courant alternatif à moyenne fréquence dans un conducteur primaire auquel au moins une bobine secondaire servant à alimenter au moins un consommateur est couplée par induction,
dans lequel l'alimentation est réalisée de telle sorte qu'une largeur d'impulsion, un rapport de largeur d'impulsion et/ou la variation d'amplitude du courant alternatif peuvent être prescrits, commandés ou réglés,
**caractérisé en ce que**
le conducteur primaire est prévu allongé, le consommateur étant disposé de manière mobile le long du conducteur primaire,
dans lequel la largeur d'impulsion, la durée de largeur d'impulsion et/ou le temps caractéristique de la modulation d'amplitude, comme la durée de période de modulation d'amplitude, sont dix fois supérieurs ou plus à la durée de période du courant à moyenne fréquence.

2. Système de transmission d'énergie sans contact,
comprenant une alimentation qui applique un courant alternatif à moyenne fréquence dans un conducteur primaire auquel au moins une bobine secondaire servant à alimenter au moins un consommateur est couplée par induction,
dans lequel l'alimentation est réalisée de telle sorte qu'une largeur d'impulsion, un rapport de largeur d'impulsion et/ou la variation d'amplitude du courant alternatif peuvent être prescrits, commandés ou réglés,
**caractérisé en ce que**
le conducteur primaire est prévu de telle sorte que le consommateur est disposé de manière rotative par rapport au conducteur primaire,
dans lequel la largeur d'impulsion, la durée de largeur d'impulsion et/ou le temps caractéristique de la modulation d'amplitude, comme la durée de période de modulation d'amplitude, sont dix fois supérieurs ou plus à la durée de période du courant à moyenne fréquence.

3. Système selon la revendication 1 ou 2,
**caractérisé en ce que**
la moyenne fréquence est comprise entre 9 et 100 kHz.

4. Système selon l'une des revendications précédentes,
**caractérisé en ce que**
le rapport de largeur d'impulsion est adapté à la réserve d'énergie et à la consommation d'énergie des consommateurs.

5. Système selon l'une des revendications précédentes,
**caractérisé en ce que**
les consommateurs avec les bobines secondaires qui leur sont associées sont disposés de manière mobile le long du conducteur primaire.

6. Système selon l'une des revendications précédentes,
**caractérisé en ce**
**qu'**un contrôleur de ligne est respectivement associé au conducteur primaire ou à des sections du conducteur primaire.

7. Système selon l'une des revendications précédentes,
**caractérisé en ce**
**qu'**il comprend des moyens pour l'échange de données de l'alimentation électrique, du contrôleur de ligne et/ou du ou des consommateur(s).

8. Système selon l'une des revendications précédentes,
**caractérisé en ce que**
la largeur d'impulsion, le rapport de largeur d'impulsion et/ou la variation d'amplitude peuvent être prescrits en fonction de données telles que le nombre de consommateurs dans une section de ligne, la quantité d'énergie dans la réserve d'énergie du consommateur, le besoin en puissance respectif du consommateur.

9. Système selon l'une des revendications précédentes,
**caractérisé en ce**
**qu'**un consommateur comprend des moyens pour déterminer la variation dans le temps de son besoin en puissance ou de son besoin en courant.

10. Système selon l'une des revendications précédentes,
**caractérisé en ce**
**qu'**un consommateur comprend des moyens pour transmettre des informations sur la variation dans le temps de son besoin en puissance ou de son besoin en courant à l'alimentation ou à un ordinateur relié à l'alimentation pour la transmission de signaux ou d'informations.

11. Procédé pour faire fonctionner un système de transmission d'énergie sans contact, dans lequel un courant alternatif à moyenne fréquence est appliqué par une alimentation dans un conducteur primaire allongé auquel au moins une bobine secondaire servant à alimenter au moins un consommateur est couplée par induction,
dans lequel le consommateur est disposé de manière mobile le long du conducteur primaire,
**caractérisé en ce que**
le courant est injecté de telle sorte que les pertes ohmiques soient aussi faibles que possible ou minimales,
le courant étant injecté de telle sorte qu'une largeur d'impulsion, un rapport de largeur d'impulsion et/ou la variation d'amplitude du courant alternatif soient prescrits, commandés ou réglés, et que la largeur d'impulsion, la durée de largeur d'impulsion et/ou le temps caractéristique de la modulation d'amplitude, comme la durée de période de modulation d'amplitude, soient dix fois supérieurs ou plus à la durée de période du courant à moyenne fréquence.

12. Procédé selon la revendication 11,
**caractérisé en ce que**
des informations telles que le nombre de consommateurs dans une section de ligne, la quantité d'énergie dans la réserve d'énergie du consommateur et/ou le besoin en puissance respectif du consommateur sont prises en compte.

13. Procédé selon la revendication 11 ou 12,
**caractérisé en ce que**
le besoin en puissance et/ou la variation dans le temps du besoin en puissance d'un consommateur sont déterminé(e)s à l'avance, en particulier avant leur apparition.

14. Procédé selon l'une des revendications 11 à 13,
**caractérisé en ce**
**qu'**une variation dans le temps du courant dans le conducteur primaire est prévue de telle sorte qu'une valeur critique du courant est dépassée pendant un intervalle de temps, la valeur critique étant la valeur de courant maximale admissible pour le conducteur primaire pour une valeur de courant permanent constante dans le conducteur primaire et l'intervalle de temps étant assez court pour qu'aucune destruction du conducteur primaire résultant de la variation du courant dans cet intervalle de temps ne soit à attendre.
